# EUROPEAN PATENT APPLICATION

(11) **EP 4 534 329 A1**
(43) Date of publication of application: **09.04.2025**
(21) Application number: 23831354.8
(22) Date of filing: 26.06.2023
(51) Int. Cl.: B60L 50/75, A01B 71/02, B60L 58/30

(54) **WORK VEHICLE**

(30) Priority: 28.06.2022 JP 2022103775
(71) Applicant: Kubota Corporation, Osaka 556-8601 (JP)
(72) Inventor: AMITANI, Kodai, Sakai-shi, Osaka 590-0908 (JP); IWAMI, Kenichi, Sakai-shi, Osaka 590-0908 (JP); SAKANO, Tomoyoshi, Sakai-shi, Osaka 590-0908 (JP); TAKAKI, Go, Sakai-shi, Osaka 590-0908 (JP); MINAMIDE, Yuki, Sakai-shi, Osaka 590-0908 (JP); TAKAKI, Takahiro, Sakai-shi, Osaka 590-0908 (JP); HAYASHI, Yosuke, Sakai-shi, Osaka 590-0908 (JP)
(74) Representative: Cabinet Beau de Loménie
(86) International application number: PCT/JP2023/023490
(87) International publication number: WO 2024/004912

(57) **Abstract**

A work vehicle includes: a fuel cell module including a fuel cell stack; at least one fuel tank to store fuel to be supplied to the fuel cell stack; a sensor that measures the remaining amount of fuel in the fuel tank; a motor connected to the fuel cell module; a power take-off shaft to be driven by the motor and to which an implement is connected; a display device; and a processing device to estimate, based on the measured remaining amount of fuel and a type of the implement connected to the power take-off shaft and/or a type of work performed by the implement, at least one of a travelable distance, a travelable area, or a travelable time with the work, and to display an estimation result on the display device.

## Description

### TECHNICAL FIELD

The present disclosure relates to work vehicles.

### BACKGROUND ART

In the field of motor vehicles, where the main purpose is to transport "people" or "objects", electric vehicles (EVs) are becoming increasingly popular. In these vehicles, the driving force (traction) is generated by an electric motor (hereinafter referred to as "motor") instead of an internal combustion engine.

On the other hand, there is a need to reduce the amount of carbon dioxide (CO₂) emitted by work vehicles, such as tractors used in agricultural fields, to realize a decarbonized society. Unlike typical automobiles, work vehicles such as tractors need to tow implements, which are work machines, to perform agricultural tasks such as plowing. Therefore, to achieve the electrification of work vehicles, there are issues to be solved that differ from those of passenger cars.

Patent Document 1 discloses a vehicle including a fuel cell, a battery, a drive device to convert power generated by the fuel cell and battery into motive power, and a display device to display an indicator showing the power output from the fuel cell and battery. The display device displays information on the indicator showing a threshold used to determine whether to supply power to the drive device from either the fuel cell or battery, or from both the fuel cell and battery.

### CITATION LIST

### PATENT LITERATURE

[Patent Document 1] Japanese Laid-Open Patent Publication No. 2021-123177

### SUMMARY OF INVENTION

### TECHNICAL PROBLEM

The present disclosure provides technology for improving the convenience of a work vehicle equipped with a fuel cell module.

### SOLUTION TO PROBLEM

A work vehicle according to one aspect of the present disclosure includes: a fuel cell module including a fuel cell stack; at least one fuel tank to store fuel to be supplied to the fuel cell stack; a sensor to measure a remaining amount of fuel in the fuel tank; a motor connected to the fuel cell module; a power take-off shaft to be driven by the motor and to which an implement is connected; a display device; and a processing device to estimate, based on the measured remaining amount of fuel and a type of the implement connected to the power take-off shaft and/or a type of work performed by the implement, at least one of a travelable distance, a travelable area, or a travelable time with the work , and to display an estimation result on the display device.

Comprehensive or specific aspects of the present disclosure may be achieved by apparatuses, systems, methods, integrated circuits, computer programs, or computer-readable nontransitory storage media, or any combination thereof. The computer-readable storage media may include volatile storage media or non-volatile storage media. The apparatuses may be configured with a plurality of devices. When the apparatuses are configured with two or more devices, the two or more devices may be arranged within a single equipment or may be arranged separately in two or more pieces of equipment.

### ADVANTAGEOUS EFFECTS OF INVENTION

According to embodiments of the present disclosure, it becomes possible to improve the convenience of a work vehicle equipped with a fuel cell module.

### BRIEF DESCRIPTION OF DRAWINGS

[Fig. **1**] A plan view schematically showing a basic configuration example of a work vehicle according to the present disclosure.
[Fig. **2**] A diagram showing a basic configuration example of a fuel cell power generation system mounted on the work vehicle.
[Fig. **3**] A block diagram schematically showing an example of electrical connections and power transmission between components of the work vehicle according to the present disclosure.
[Fig. **4**] A block diagram schematically showing paths of electrical signals (solid thin lines) and coolant paths (dotted lines) between components of a work vehicle according to the present disclosure.
[Fig. **5**] A perspective view schematically showing a configuration example of a work vehicle according to an embodiment of the present disclosure.
[Fig. **6**] A side view schematically showing a configuration example of a work vehicle according to an embodiment of the present disclosure.
[Fig. **7**] A block diagram showing an example hardware configuration of an operation terminal.
[Fig. **8**] A diagram showing an example of a table indicating the relationship between implement types, work types, and fuel consumption.
[Fig. **9A**] A diagram schematically showing an example of displaying estimation results on the display device when driving an implement.
[Fig. **9B**] A diagram schematically showing an example of displaying estimation results on the display device when not driving an implement.
[Fig. **10**] A diagram schematically showing another example of displaying estimation results on the display device.
[Fig. **11**] A diagram schematically showing an example of a display including information prompting fuel replenishment.
[Fig. **12**] A diagram schematically showing an example of a popup display including information on travelable time.
[Fig. **13**] A diagram schematically showing an example of a display including map information.
[Fig. **14**] A flowchart showing an example of the processing procedure for the operation of the processing device.

### DESCRIPTION OF EMBODIMENTS

The following describes embodiments of the present disclosure. However, excessively detailed explanations may be omitted. For example, detailed explanations of well-known matters and repetitive explanations of substantially identical configurations may be omitted. This is to avoid the following description from becoming unnecessarily redundant and to facilitate understanding by those skilled in the art. The inventors provide the attached drawings and the following description to enable those skilled in the art to fully understand this disclosure, and do not intend to limit the subject matter described in the claims by these drawing and description. In the following description, the same reference numerals are used for components with the same or similar functions.

The following embodiments are illustrative and not limiting. The technologies disclosed herein are not restricted to the following embodiments. For instance, the numerical values, shapes, materials, steps, the order of those steps, screen layouts, and other elements shown in the following embodiments are merely examples. Various modifications can be made as long as no technical contradictions arise. Additionally, different features, elements, characteristics, etc., of the example embodiments may be combined as long as there are no technical contradictions.

In this disclosure, the term "work vehicle" refers to a vehicle used to perform a task at a work site. A "work site" includes any place where work is carried out, such as a field, forest, or construction site. A "field" refers to any place where agricultural work is performed, such as an orchard, farm, paddy field, grain farm, or pasture. A work vehicle may include an agricultural machine such as a tractor, rice planter, combine harvester, riding field management vehicle, or riding mower, as well as a non-agricultural vehicle such as a construction work vehicle or snowplow. The work vehicles described in this disclosure may be equipped with an implement (also called a "work machine" or "work device") attached to at least one of its front and rear portions, depending on the nature of the work. Travel of a work vehicle while performing a task may be referred to as "tasked travel".

An "agricultural machine" refers to a machine for agricultural application. Examples of agricultural machines include tractors, harvesters, rice planters, riding field management vehicles, vegetable transplanters, mowers, seeders, spreaders, and agricultural mobile robots. Not only may a work vehicle such as a tractor function as an "agricultural machine" on its own, but also the entire combination of a work vehicle and an implement attached to or towed by the work vehicle may function as an "agricultural machine". An agricultural machine performs agricultural work on the ground in a field, such as tilling, seeding, pest control, fertilizing, planting crops, or harvesting.

### 1. <Basic Configuration of Work Vehicle>

An example of the basic configuration and operation of the work vehicle according to this disclosure will be described. The work vehicle described below includes a motor and a fuel cell power generation system (hereinafter referred to as "FC power generation system") that is configured to generate the power necessary to drive the motor.

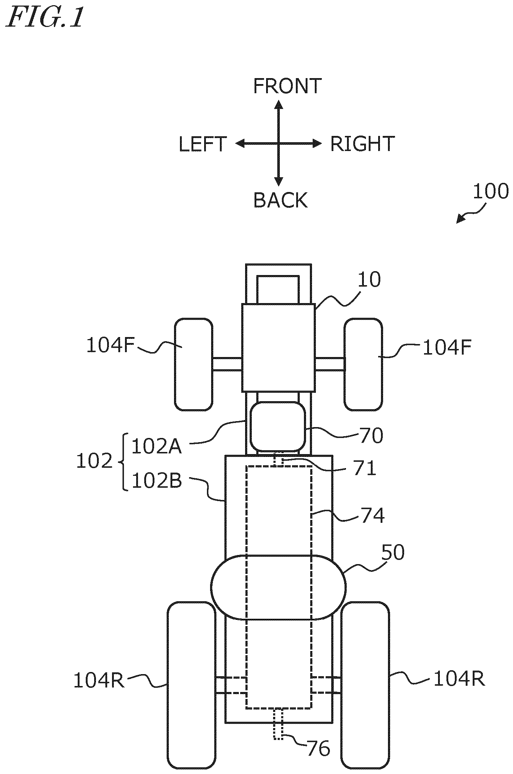

FIG. **1** is a plan view schematically showing an example of the basic configuration of a work vehicle **100** according to the present disclosure. In this disclosure, the direction in which the work vehicle **100** travels straight forward is referred to as the "forward direction", and the direction in which it travels straight backward is referred to as the "backward direction". In a plane parallel to the ground, the direction extending perpendicularly to the right of the "forward direction" is referred to as the "right direction", and the direction extending perpendicularly to the left is referred to as the "left direction". In FIG. **1****,** the "forward direction", "backward direction", "right direction", and "left direction" are indicated by arrows labeled "front", "back", "right", and "left" respectively. Both the forward and backward directions may be collectively referred to as the "front-back direction".

The work vehicle **100** illustrated in this example is, for instance, a tractor, which defines and functions as an example of agricultural machinery. The technologies disclosed herein are not limited to work vehicles such as tractors and may be applied to other types of work vehicles. The work vehicle **100** is configured to attach or tow an implement and travel within a field while performing agricultural tasks appropriate to the type of implement. Additionally, the work vehicle **100** is configured to travel both within and outside the field (including on roads) with the implement raised or without an implement attached.

The work vehicle **100,** like a conventional tractor, includes a vehicle frame **102** that rotatably supports left and right front wheels **104F** and left and right rear wheels **104R.** The vehicle frame 102 includes a front frame **102A,** where the front wheels **104F** are mounted, and a transmission case **102B,** where the rear wheels **104R** are mounted. The front frame **102A** is fixed to the front portion of the transmission case **102B.** The front wheels **104F** and rear wheels **104R** may be collectively referred to as wheels **104.** Strictly speaking, the wheels **104** refer to wheel rims with tires attached. In this disclosure, the term "wheel" generally refers to the entire assembly of the "wheel rim and tire". Either or both of the front wheels **104F** and rear wheels **104R** may be replaced with a plurality of wheels (crawlers) fitted with endless tracks instead of wheeled tires.

In the example shown in FIG. **1****,** the work vehicle **100** includes a fuel cell module (FC module) **10** and a motor **70,** which are directly or indirectly supported by the front frame **102A.** The FC module **10** includes a fuel cell stack (FC stack) and functions as an onboard power generator that generates electricity from fuel, as will be described later. Hereinafter, the terms "FC module" or "FC stack" may simply be referred to as "fuel cell".

The motor **70** is electrically connected to the FC module **10.** The motor **70** converts the electric power generated by the FC module **10** into mechanical motion (power) to produce the driving force (traction) necessary for the work vehicle **100** to travel. An example of the motor **70** is an AC synchronous motor. Since the FC stack of the FC module **10** generates direct current, when the motor **70** is an AC synchronous motor, a group of electrical circuits, including an inverter device, is installed between the FC stack and the motor **70** to convert the direct current to alternating current. A portion of such electrical circuit group may be inside the FC module **10,** while another portion of the electrical circuit group may be attached to the motor **70** as a motor drive circuit.

The motor **70** includes an output shaft **71** that rotates. The torque of the output shaft **71** is transmitted to the rear wheels **104R** through mechanical components such as a transmission (gearbox) and a rear wheel differential gear device installed inside the transmission case **102B.** In other words, the power generated by the motor **70,** which serves as the power source, is transmitted to the rear wheels **104R** through a power transmission system (drivetrain) **74** including the transmission installed in the transmission case **102B.** For this reason, the "transmission case" may also be referred to as a "mission case". In four-wheel drive mode, a portion of the power of the motor **70** is also transmitted to the front wheels **104F.** The power of the motor **70** may be used not only to drive the work vehicle **100** but also to operate implements. Specifically, a power take-off (PTO) shaft **76** is provided at the rear end of the transmission case **102B.** The PTO shaft **76** is driven by the motor **70** and implements is configured to be connected to. The torque from the output shaft **71** of the motor **70** is transmitted to the PTO shaft **76.** Implements attached to or towed by the work vehicle **100** are configured to receive power from the PTO shaft **76** to perform various work-related operations. The motor **70** and the power transmission system **74** may collectively be referred to as an electric powertrain.

Thus, the work vehicle **100** disclosed herein does not include an internal combustion engine such as a diesel engine, but includes the FC module **10** and the motor **70.** Additionally, the output shaft **71** of the motor **70** is mechanically coupled to the power transmission system **74,** including the transmission in the transmission case **102B.** The motor **70** efficiently generates torque over a relatively wide range of rotational speeds compared to an internal combustion engine. However, by utilizing the power transmission system **74,** including the transmission, it becomes easier to adjust the torque and rotational speed from the motor **70** over an even wider range by performing multi-stage or continuously variable speed change operations. This configuration allows for efficient execution of not only the travel of the work vehicle **100** but also various operations using implements.

Depending on the application or size of the work vehicle **100,** some functions of the power transmission system **74** may be omitted. For example, a portion or an entirety of the transmission responsible for speed change functions may be omitted. The number and mounting position of motors **70** are also not limited to the example shown in FIG. **1****.**

The work vehicle **100** includes at least one fuel tank **50** that stores fuel to be supplied to the FC module **10.** For simplicity, FIG. **1** shows one fuel tank **50.** In some embodiments, a plurality of fuel tanks **50** may be housed in a tank case to define a fuel tank module. The fuel tank **50** is supported by structural elements fixed to the vehicle frame **102A** described later. The FC module **10** and the fuel tank **50** are connected by piping and open/close valves, and similar components, defining an FC power generation system mounted on a vehicle. The configuration and operation of the FC power generation system will be described later.

The work vehicle **100** in the embodiments described later includes a seat for a driver, hereinafter referred to as "a driver seat", supported by the vehicle frame **102.** The driver seat may be enclosed by a cabin supported by the vehicle frame **102.** In the embodiments described later, the FC module **10** is positioned in front of the driver seat, and the fuel tank **50** is positioned above the driver seat. Such FC module **10** and fuel tank **50** are housed in at least one "enclosure". The "enclosure" functions as a housing, for example, and plays a role in protecting the FC module **10** and fuel tank **50** from sunlight exposure and wind and rain. Additionally, such an enclosure is designed to control the spread of fuel gas into the atmosphere and to facilitate the detection of fuel gas when fuel gas leaks from the FC module **10** or fuel tank **50.**

The FC module **10** may be housed in a front housing called a "bonnet", for example. The front housing is a portion of the "enclosure". The front housing is supported by the front portion of the vehicle frame **102** (front frame **102A**). The fuel tank **50** is housed in a tank case, as mentioned earlier. The tank case is directly or indirectly supported by the vehicle frame **102.**

### 2. <FC Power Generation System>

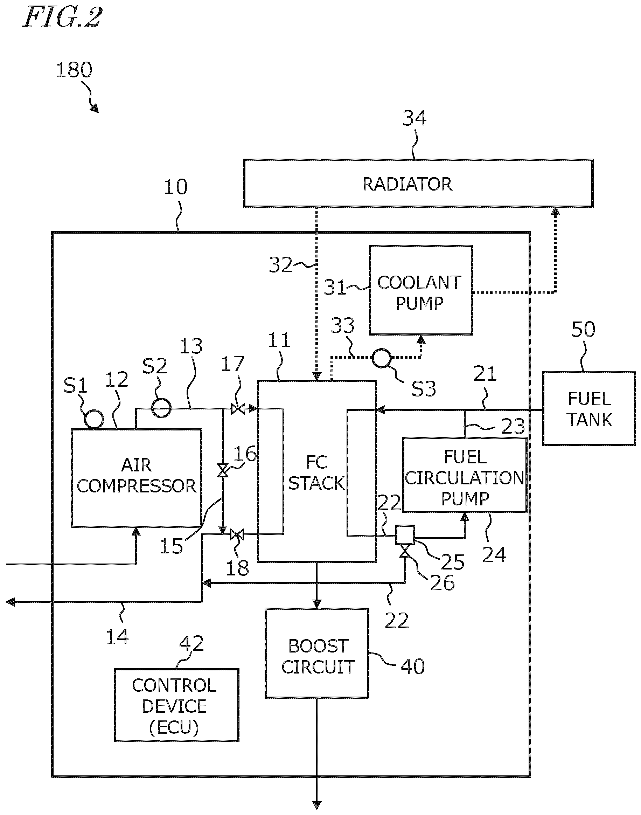

Next, referring to FIG. **2****,** a basic configuration example of the FC power generation system **180** mounted on the work vehicle **100** will be explained.

The FC power generation system **180** shown in FIG. **2** functions as an onboard power generation system in the work vehicle **100** of FIG. **1****.** The electric power generated by the FC power generation system **180** is used not only for the travel of the work vehicle **100** but also for the operation of implements towed or attached to the work vehicle **100.**

The FC power generation system **180** in the illustrated example includes the FC module **10** and at least one fuel tank **50** that stores fuel to be supplied to the FC module **10.** The FC power generation system **180** also includes a radiator device **34** for cooling the FC module **10.**

The FC module **10** includes main components such as a fuel cell stack (FC stack) **11,** an air compressor **12,** a fuel circulation pump **24,** a coolant pump **31,** a boost circuit **40,** and a control device **42.** These components are housed within the casing of the FC module **10** and are connected to each other through electrical or fluid communication.

The FC stack **11** generates electric power through an electrochemical reaction between the fuel, referred to as "anode gas" and the oxidizing gas, referred to as "cathode gas". In this example, the FC stack **11** is composed of polymer electrolyte fuel cells. The FC stack **11** has a stack structure in which a plurality of single cells (fuel cell elements) are stacked. A single cell includes, for example, an electrolyte membrane formed from an ion exchange membrane, an anode electrode formed on one side of the electrolyte membrane, a cathode electrode formed on the other side of the electrolyte membrane, and a pair of separators sandwiching the anode electrode and cathode electrode on both sides. The voltage generated in a single cell is, for example, less than **1** volt. Therefore, in the FC stack **11,** for instance, more than **300** single cells are connected in series to generate a voltage of several hundred volts.

Anode gas is supplied to the anode electrode of the FC stack **11.** The anode gas is called "fuel gas" or simply "fuel". In the embodiments of this disclosure, the anode gas (fuel) is hydrogen gas. Cathode gas is supplied to the cathode electrode. The cathode gas is an oxidizing gas such as air. The anode electrode is called the fuel electrode, and the cathode electrode is called the air electrode.

At the anode electrode, the electrochemical reaction shown in the following equation (1) occurs.

2H₂ → 4H⁺ + 4e ... equation (1)

At the cathode electrode, the electrochemical reaction shown in the following equation (2) occurs.

4H⁺ + 4e + O₂ → 2H₂O ... equation (2)

Overall, the reaction shown in the following equation (3) occurs.

2H₂ + O₂ → 2H₂O ... equation (3)

The anode gas after being used in the above reaction is called "anode off-gas", and the cathode gas after being used in the reaction is called "cathode off-gas".

The air compressor **12** supplies air taken from the outside as cathode gas to the cathode electrode of the FC stack **11.** The cathode gas supply system including the air compressor **12** includes a cathode gas supply pipe **13,** a cathode off-gas pipe **14,** and a bypass pipe **15.** The cathode gas supply pipe **13** flows cathode gas (air) supplied from the air compressor **12** to the cathode electrode of the FC stack **11.** The cathode off-gas pipe **14** flows cathode off-gas discharged from the FC stack **11** to the outside air. The bypass pipe **15** branches from the cathode gas supply pipe **13** downstream of the air compressor **12,** bypasses the FC stack **11,** and connects to the cathode off-gas pipe **14.** A control valve **16** is provided on the bypass pipe **15** to adjust the flow rate of cathode gas flowing through the bypass pipe **15.** A shut-off valve **17** is provided on the cathode gas supply pipe **13** to selectively block the inflow of cathode gas to the FC stack **11.** A pressure regulating valve **18** is provided on the cathode off-gas pipe **14** to adjust the back pressure of the cathode gas.

The cathode gas supply system of the FC module **10** includes a rotation speed detection sensor **S1** that detects the rotation speed of the air compressor **12** and a gas flow rate detection sensor **S2** that detects the flow rate of cathode gas flowing through the cathode gas supply pipe **13.** The control valve **16,** shut-off valve **17,** and pressure regulating valve **18** are, for example, electromagnetic valves.

The fuel circulation pump **24** supplies fuel gas (anode gas) sent from the fuel tank **50** to the anode electrode of the FC stack **11.** The anode gas supply system including the fuel circulation pump **24** includes an anode gas supply pipe **21,** an anode off-gas pipe **22,** and a circulation path **23.** The anode gas supply pipe **21** flows anode gas supplied from the fuel tank **50** to the anode electrode of the FC stack **11.** In the embodiments of this disclosure, the fuel tank **50** is a hydrogen tank that stores high-pressure hydrogen gas.

The anode off-gas pipe **22** flows anode off-gas discharged from the FC stack **11.** The anode off-gas is led through the anode off-gas pipe **22** to a gas-liquid separator **25** in which moisture is removed. The anode off-gas with moisture removed returns to the anode gas supply pipe **21** through the circulation path **23** by the fuel circulation pump **24.** The anode off-gas circulating through the circulation path **23** can be discharged through the anode off-gas pipe **22** by opening an exhaust valve **26.** Moisture accumulated in the gas-liquid separator **25** can be discharged through the anode off-gas pipe **22** by opening the exhaust valve **26.** The exhaust valve **26** is, for example, an electromagnetic valve. In the example shown in the figure, the anode off-gas pipe **22** is connected to the cathode off-gas pipe **14.** By adopting this configuration, it is possible to improve the utilization efficiency of the anode gas by circulating the anode off-gas containing unreacted anode gas that did not contribute to the electrochemical reaction and supplying it again to the FC stack **11.**

To enhance the performance of the FC stack **11,** temperature control is important. When generating electricity through the reaction of producing water from hydrogen gas and oxygen gas, heat is also generated, necessitating cooling. FIG. **2** shows a coolant circulation system including a coolant pump **31** for the FC stack **11,** but as described later, cooling circulation systems for other electrical equipment may also be provided. Note that the air compressor **12,** fuel circulation pump **24,** and coolant pump **31** included in the FC module **10** are driven by individual built-in motors. These motors are also electrical equipment.

The coolant circulation system including the coolant pump **31** shown in FIG. **2** includes a coolant supply pipe **32,** a coolant discharge pipe **33,** a radiator device **34,** and a temperature sensor **S3.** This coolant circulation system is configured to adjust the temperature of the FC stack **11** within a predetermined range by circulating coolant through the FC stack **11.** The coolant is supplied to the FC stack **11** through the coolant supply pipe **32.** The supplied coolant flows through a coolant path between single cells and is discharged into the coolant discharge pipe **33.** The coolant discharged into the coolant discharge pipe **33** flows to the radiator device **34.** The radiator device **34** performs heat exchange between the incoming coolant and the outside air to release heat from the coolant, and then resupplies the cooled coolant to the coolant supply pipe **32.**

The coolant pump **31** is provided on either the coolant supply pipe **32** or the coolant discharge pipe **33** to pump coolant to the FC stack **11.** A coolant bypass flow path may be provided between the coolant discharge pipe **33** and the coolant supply pipe **32.** In that case, a flow dividing valve is provided at the branching point at which the coolant bypass flow path branches from the coolant discharge pipe **33.** The flow dividing valve is configured to adjust the flow rate of coolant flowing through the bypass flow path. The temperature sensor **S3** detects the temperature of the coolant flowing through the coolant discharge pipe **33.**

The coolant used to cool the FC stack **11** is circulated through the flow path by an electric coolant pump **31.** A coolant control valve may be provided downstream of the FC stack **11.** The coolant control valve adjusts the ratio of coolant flowing to the radiator device **34** and coolant bypassing the radiator device **34,** enabling more accurate control of the coolant temperature. Furthermore, by controlling the liquid delivery amount by the coolant pump, it is also possible to control the coolant temperature difference between the inlet and outlet of the FC stack **11** to be within a desired range. The temperature of the coolant in the FC stack **11** may be controlled to be around 70°C, for example, which is a temperature where the power generation efficiency of the FC stack **11** is high.

The coolant flowing through the FC stack **11** preferably has higher insulation properties compared to the coolant used to cool ordinary electrical equipment. Since voltages exceeding 300 volts can occur in the FC stack **11,** increasing the electrical resistance of the coolant allows for the suppression of current leakage through the coolant or devices such as the radiator device **34.** The electrical resistance of the coolant may decrease as the coolant is used. This is because ions dissolve into the coolant flowing through the FC stack **11.** To remove such ions from the coolant and increase insulation property, it is desirable to place an ion exchanger in the coolant flow path.

The boost circuit **40** is configured to increase the voltage output by the FC stack **11** through power generation to a desired level. The subsequent stage of the boost circuit **40** is connected to the high-voltage electrical circuit including an inverter device for motor drive. Additionally, the subsequent stage of the boost circuit **40** may also be connected in parallel to the low-voltage electrical circuit via a step-down circuit.

The control device **42** may include an electronic control unit (ECU) configured or programmed to control power generation by the FC module **10.** The control device **42** detects or estimates the operating state of the FC power generation system **180** based on signals output from various sensors. The control device **42** is configured or programmed to control power generation by the FC stack **11** by regulating the operation of the air compressor **12,** fuel circulation pump **24,** coolant pump **31,** and various valves, based on the operating state of the FC power generation system **180** and instructions output from a primary computer or other ECUs. The control device **42** includes, for example, a processor, a storage device, and an input/output interface.

In the following description, for simplicity, "anode gas" may be referred to as "fuel gas" or "fuel", and "anode gas supply pipe" may be referred to as "piping".

### 3. <Configuration Example of System of Work Vehicle>

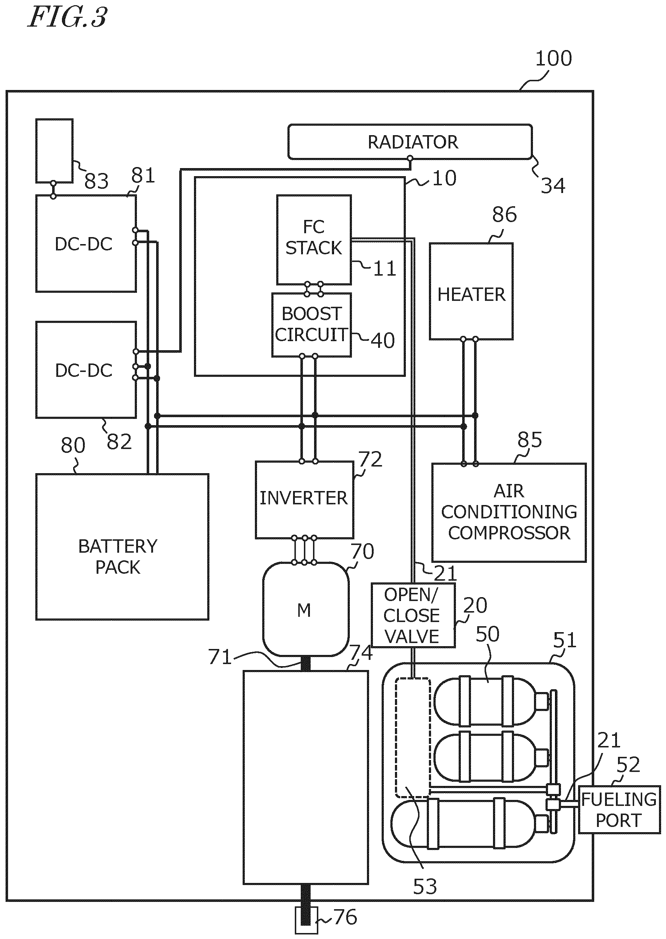

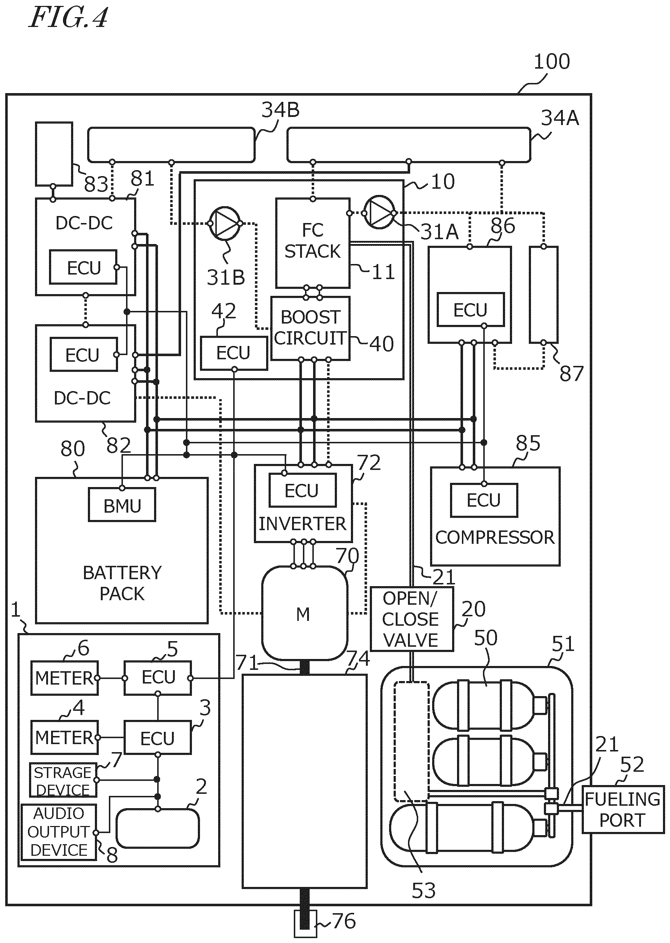

Next, referring to FIGS. **3** and **4****,** a configuration example of the system of the work vehicle **100** according to this disclosure will be described. FIG. **3** is a block diagram schematically showing an example of electrical connections and power transmission between components of the work vehicle **100** according to this disclosure. FIG. **4** is a block diagram showing a more detailed configuration than the example in FIG. **3****.** FIG. **4** schematically shows the paths of electrical signals (thin solid lines) and coolant (dotted lines) between components in the work vehicle **100.**

First, referring to FIG. **3****,** an example of the electrical connections and power transmission between components will be described. Electrical connections include both high-voltage and low-voltage systems. High-voltage electrical connections provide, for example, the power supply voltage for inverter devices. Low-voltage electrical connections provide, for example, the power supply voltage for electronic components that operate at relatively low voltages.

In the example shown in FIG. **3****,** the work vehicle **100** includes an FC module **10,** an inverter device **72,** a motor **70,** a power transmission system **74,** and a PTO shaft **76.** The DC voltage of the power generated in the FC stack **11** of the FC module **10** is boosted by the boost circuit **40** and then supplied to the inverter device **72.** The inverter device **72** converts the DC voltage into, for example, a three-phase AC voltage and supplies it to the motor **70.** The inverter device **72** includes a bridge circuit including a plurality of power transistors. The motor **70** includes a rotating rotor and a stator with a plurality of coils electrically connected to the inverter device **72.** The rotor is coupled to the output shaft **71,** for example, via a reduction gear (speed reducer) or directly. The motor **70** rotates the output shaft **71** with torque and rotational speed controlled according to the waveform of the three-phase AC voltage from the inverter device **72.**

The torque of the output shaft **71** of the motor **70** is transmitted to the power transmission system **74.** The power transmission system **74** operates with the motor **70** as the power source and drives the wheels **104R** and **104F,** and/or the PTO shaft **76** shown in FIG. **1****.** This power transmission system **74** may have the same or similar structure as the power transmission system in conventional tractors including internal combustion engines such as diesel engines. By adopting a power transmission system used in agricultural tractors, for example, it is possible to reduce the design and manufacturing costs for producing an agricultural work vehicle **100** including an FC power generation system. The power transmission system **74** includes a travel power transmission mechanism that transmits power from the motor **70** to the left and right rear wheels **104R** through a clutch, transmission, and rear wheel differential device, and a PTO power transmission mechanism that transmits power from the motor **70** to the PTO shaft **76.** The power transmission system **74** includes a PTO clutch that switches between a state (connected state) in which power from the motor **70** is transmitted to the PTO shaft **76** and a state (disconnected state) in which it is not transmitted. The PTO clutch may be manually operated by the driver through the operation of an operating portion such as a clutch pedal. The PTO clutch may also be automatically disconnected by control or other means. The transmission case **102B** in FIG. **1** may be divided into a front case (mission case) housing clutches such as the PTO clutch and transmission, and a rear case (differential gear case) housing the rear wheel differential device. The rear case may also be referred to as a rear axle case.

The work vehicle **100** includes a secondary battery (battery pack) **80** that temporarily stores electrical energy generated by the FC module **10.** An example of the battery pack **80** includes a pack of lithium-ion batteries. The battery pack **80** is configured to supply power to the inverter device **72** at the necessary timing in cooperation with the FC module **10** or independently. Various battery packs used in electric passenger vehicles may be adopted as the battery pack **80.**

The work vehicle **100** includes various electrical equipment (onboard electronic components) that operates on electricity, in addition to the motor **70** and the inverter device 72. Examples of electrical equipment include electromagnetic valves such as open/close valves **20,** air cooling fans of the radiator device **34,** electric pumps of air conditioning compressors **85,** and temperature control devices to heat or cool the FC stack **11.** The temperature control devices include electric heaters **86.** First and second DC-DC converters **81** and **82** to obtain appropriate power supply voltages for the operation of electrical equipment, and storage batteries **83** may also be included in the electrical equipment. Furthermore, various electronic components not shown (such as lamps, electric motors for hydraulic systems) may be included in the electrical equipment. The electrical equipment may be electronic components similar to electrical equipment installed in conventional agricultural tractors.

In the example of FIG. **3****,** the first DC-DC converter **81** is a circuit that steps down the voltage output from the boost circuit **40** of the FC module **10** to a first voltage, for example, 12 volts. The storage battery **83** is, for example, a lead-acid battery and stores electrical energy at the voltage output from the first DC-DC converter **81.** The storage battery **83** may be used as a power source for various electrical equipment such as lamps.

The work vehicle **100** shown in FIG. **3** includes not only the first DC-DC converter **81** but also a second DC-DC converter **82** as a voltage conversion circuit that steps down the high voltage output by the FC module **10.** The second DC-DC converter **82** is a circuit that steps down the voltage output from the boost circuit **40** of the FC module **10** (for example, several hundred volts) to a second voltage higher than the first voltage, for example, 24 volts. The air cooling fan of the radiator device **34,** for example, is configured to operate on the voltage output from the second DC-DC converter **82.** Note that although the radiator device **34** is described as a single component in FIG. **3****,** one work vehicle **100** may include a plurality of radiator devices **34.** Additionally, the electric pump of the air conditioning compressor **85** and the electric heater **86** are configured to operate on the voltage output from the second DC-DC converter **82.**

The work vehicle **100** shown in FIG. **3** includes a temperature control device that cools or heats the FC stack **11** included in the FC power generation system. The operation of the temperature control device or alike requires relatively large power. The relatively high 24-volt voltage output by the second DC-DC converter **82** is applied to the temperature control device. In this embodiment, the temperature control device includes the radiator device **34** that releases heat from the coolant cooling the FC stack **11,** and the relatively high 24-volt voltage (second voltage) output by the second DC-DC converter **82** is applied to the radiator device **34.** The temperature control device includes a heater **86** that heats the FC stack **11.** The relatively high voltage output by the second DC-DC converter **82** may also be applied to the heater. The relatively high voltage output by the second DC-DC converter **82** may also be applied to air conditioning devices such as the air conditioning compressor **85.**

The work vehicle **100** may include a third voltage conversion circuit that converts the high voltage output by the FC module **10** to a third voltage higher than the second voltage. The third voltage is, for example, 48 volts. If the work vehicle **100** includes another motor in addition to the motor **70,** for example, the third voltage may be used as the power source for such other motors.

In an agricultural work vehicle including a fuel cell power generation system, in addition to the electrical equipment necessary for agricultural task, the agricultural work vehicle also includes electrical equipment necessary for the operation of fuel cell power generation, so the appropriate voltage magnitude may differ for each electrical equipment. According to the embodiments of this disclosure, it is possible to supply voltages of appropriate magnitudes.

In the example shown in FIG. **3****,** a plurality of fuel tanks **50** are housed in a single tank case **51.** The fuel tank **50** is connected to a supplying port (fueling port) **52** through which fuel is supplied from the outside. This connection is made via piping **21** to flow fuel gas. The fuel tank **50** is also connected to the FC module **10** via piping **21,** which is equipped with an open/close valve **20.** When hydrogen is used as the fuel gas, the piping **21** may be formed from materials with high resistance to hydrogen embrittlement, such as austenitic stainless steel like SUS316L.

A valve space **53** is provided in the tank case **51,** and various valves including a pressure reducing valve are placed in the valve space **53.** Through various valves provided in the valve space **53,** the piping **21** connects the fuel tank **50** and the FC module **10.** Fuel gas with reduced pressure by the pressure reducing valve flows through the piping **21** connecting the tank case **51** and the FC module **10.** When the fuel gas is hydrogen gas, high-pressure hydrogen gas of, for example, 35 megapascals or more may be filled in the fuel tank **50,** but the hydrogen gas after passing through the pressure reducing valve may be reduced to about 2 atmospheres or less.

The fuel tank **50** is equipped with a sensor **S4** to measure the remaining amount of fuel in the fuel tank **50.** Additionally, a temperature sensor may be provided to measure the temperature inside the fuel tank **50.** Examples of sensor **S4** include a pressure sensor that measures the pressure of the fuel corresponding to the remaining amount of fuel. The pressure sensor acquires residual pressure data indicating the residual pressure of the fuel remaining in the fuel tank **50.**

As mentioned above, the first and second DC-DC converters **81** and **82** are configured to output voltages of different magnitudes. ECUs are also provided for these first and second DC-DC converters **81** and **82** to control each voltage conversion circuit. The relatively low first voltage which the first DC-DC converter **81** outputs is applied to these ECUs, like other ECUs.

In the example of FIG. **4****,** the work vehicle **100** includes a cooling system in which coolant circulates via coolant pumps **31A** and **31B.** These coolant pumps **31A** and **31B** are provided inside the FC module **10.** The cooling system in this example includes a first radiator device **34A** responsible for cooling the FC stack **11** and a second radiator device **34B** to cool other electrical equipment. The cooling system includes a flow path (first flow path) where coolant flows between the FC stack **11** and the first radiator device **34A.** Furthermore, this cooling system has a flow path (second flow path) where coolant flows between electrical equipment including the motor **70** and the second radiator device **34B.** In the example of FIG. **4****,** for instance, a heater core **87** used to heat the cabin is provided, and the coolant flowing through the first radiator device **34A** flows through the heater core **87.**

The user interface **1** includes an operation device **2** such as an accelerator pedal (or accelerator lever) and a main ECU 3 connected to the operation device **2.** The main ECU **3** is connected to a main meter **4.** The main meter **4** may display various parameters that identify the travel state or operating state of the work vehicle **100.** The user interface **1** further includes an FC system ECU **5** configured or programmed to control the FC power generation system. The FC system ECU **5** is connected to an FC meter **6.** The FC meter **6** may display various parameters that identify the operating state of the FC power generation system.

The user interface **1** includes an operation device **2** such as an accelerator pedal (or accelerator lever) and a main ECU **3** connected to the operation device **2.** The main ECU **3** is connected to a main meter **4,** a storage device **7,** an audio output device **8,** and other components. The main meter **4** may display various parameters that identify the travel state or operating state of the work vehicle **100.** The user interface **1** further includes an FC system ECU **5** to control the FC power generation system. The FC system ECU **5** is connected to an FC meter **6.** The FC meter **6** may display various parameters that identify the operating state of the FC power generation system.

The storage device **7** includes one or more storage media such as flash memory or magnetic disks. The storage device **7** stores various data generated by the main ECU **3** and FC system ECU **5.** The storage device **7** also stores computer programs that cause the main ECU **3** and FC system ECU **5** to perform desired operations. The computer programs may be provided to the work vehicle **100** via storage media (e.g., semiconductor memory or optical discs) or telecommunication lines (e.g., the Internet). The computer programs may be sold as commercial software.

The user interface **1** may further include an audio output device **8.** Examples of the audio output device **8** include a buzzer or a speaker. The audio output device **8** may be controlled by the main ECU **3.** For example, the audio output device **8** outputs audio prompting refueling as described later.

The cells of the battery pack **80** are controlled by a Battery Management Unit (BMU). The BMU includes circuits and a CPU (Central Processing Unit) that perform voltage monitoring for each cell of the battery, monitoring of overcharging and overdischarging, and cell balance control. These circuits and CPU may be mounted on a battery controller board.

### 4. <Embodiment>

### (4.1. Basic Configuration of the Work Vehicle)

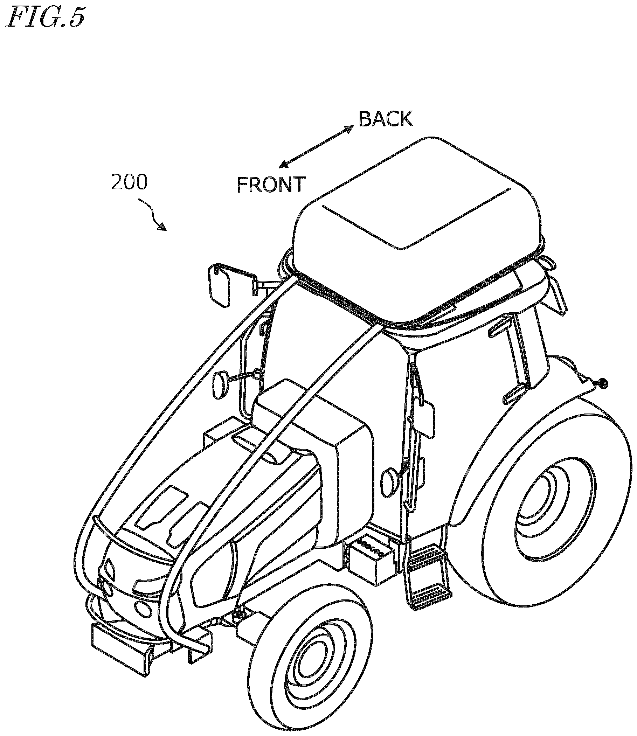

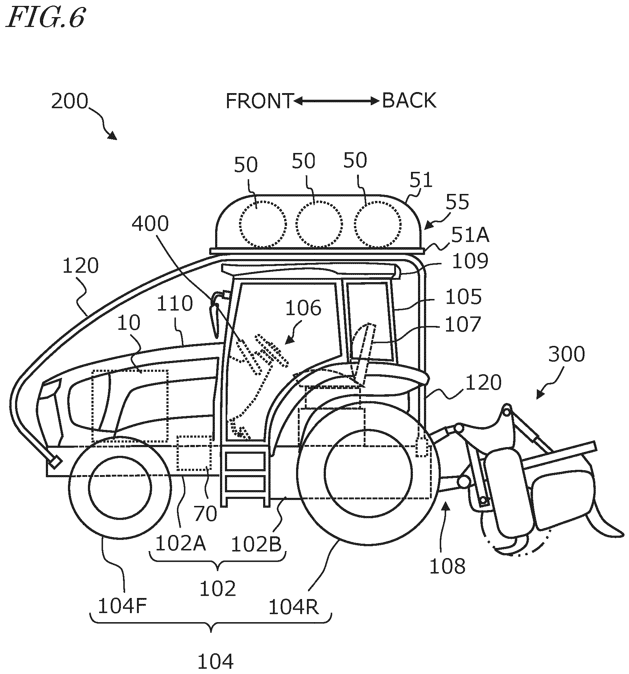

Next, referring to FIG. **5** and FIG. **6****,** a basic configuration of an embodiment of the work vehicle according to the present disclosure will be described. FIG. **5** is a perspective view schematically showing an example of the configuration of the work vehicle **200** in this embodiment. FIG. **6** is a side view schematically showing an example of the configuration of the work vehicle **200** in this embodiment.

The work vehicle **200** in this embodiment includes an FC module **10,** a fuel tank **50,** a sensor **S4** (refer to FIG. **3** or FIG. **4**), a motor **70,** a driver seat **107,** and a vehicle frame **102.** The work vehicle **200** has a configuration similar to the configuration of the work vehicle **100** explained with reference to FIG. **1****.**

The work vehicle **200** in this embodiment further includes a display device, a processing device, and an operation terminal **400.** For example, the main meter **4** and/or the FC meter **6,** or the operation terminal **400** may function as the display device. The main ECU **3,** a primary computer that communicates with the main ECU **3,** or a combination of these may function as the processing device.

The operation terminal **400** is a terminal for the user to execute operations related to the travel of the work vehicle and the operation of the implement, and is also referred to as a virtual terminal (VT). The operation terminal **400** may include a touch screen type display device and/or one or more buttons. The display device may be, for example, a display such as a liquid crystal or organic light-emitting diode (OLED). By operating the touch screen of the operation terminal **400,** the user may perform various operations such as inputting information related to the type of implement **300** and/or the type of work, altering control values for the work vehicle **200** such as vehicle speed or engine speed, and switching the implement on/off. The operation terminal **400** may be configured to be detachable from the work vehicle **200.** A user at a location away from the work vehicle **200** may operate the detached operation terminal **400** to control the operation of the work vehicle **200.**

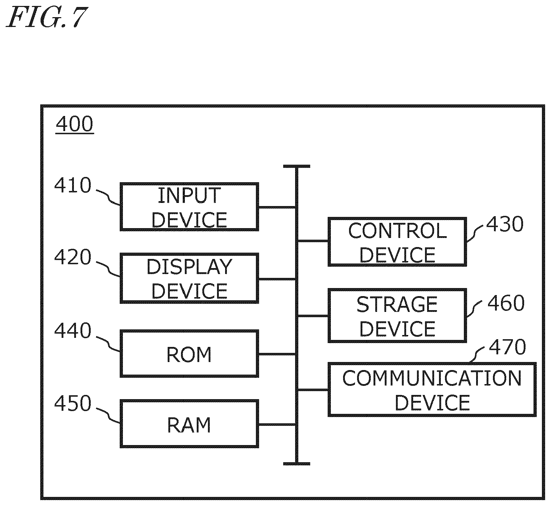

FIG. **7** is a block diagram exemplifying the hardware configuration of the operation terminal **400.** The operation terminal **400** shown in FIG. **7** includes an input device **410,** a display device **420,** a control device **430,** a ROM **440,** a RAM **450,** a storage device **460,** and a communication device **470.** These components are communicably connected to each other via a bus.

The input device **410** is a device to convert instructions from the user into data and to input it into the computer. The display device **420** may be, for example, a liquid crystal display or an organic EL display. The display device **420** includes a touch screen and, in addition to the function of displaying images, also serves as the input device **410.**

The control device **430** includes a processor. The processor may be a semiconductor integrated circuit including, for example, a central processing unit (CPU). The processor may be achieved by a microprocessor or a microcontroller. Alternatively, the processor may also be realized by an FPGA (Field Programmable Gate Array) with a CPU, a GPU (Graphics Processing Unit), an ASIC (Application Specific Integrated Circuit), an ASSP (Application Specific Standard Product), or a combination of two or more circuits selected from these circuits. The processor sequentially executes a computer program describing a group of instructions to execute at least one process stored in the ROM **440** to realize the desired processing.

The ROM **440** is, for example, a writable memory (e.g., PROM), a rewritable memory (e.g., flash memory), or a read-only memory. The ROM **440** stores programs that control the operation of the processor. The ROM **440** does not need to be a single storage medium, but may be an aggregate of a plurality of storage media. Part of the aggregate of a plurality of storage media may be removable memory.

The RAM **450** provides a work area for temporarily expanding the control program stored in the ROM **440** at boot time. The RAM **450** does not need to be a single storage medium, but may be an aggregate of a plurality of storage media.

The storage device **460** may be, for example, a magnetic storage device or a semiconductor storage device. An example of a magnetic storage device is a hard disk drive (HDD). An example of a semiconductor storage device is a solid-state drive (SSD).

The communication device **470** is a communication module to communicate, for example, with a cloud server that manages agricultural work, a work vehicle, or a terminal device that may be used by a user (such as a farm manager or agricultural worker) via a network. The communication device **470** can perform wired communication compliant with communication standards such as IEEE1394 (registered trademark) or Ethernet (registered trademark), for example. The communication device **470** may perform wireless communication compliant with Bluetooth (registered trademark) or Wi-Fi standards, or cellular mobile communication such as 3G, 4G, or 5G.

The work vehicle **200** may further include at least one sensing device that senses the environment around the work vehicle **200,** and a processor that processes sensor data output from the at least one sensing device. The sensing device may include, for example, a plurality of cameras, a LiDAR sensor, and a plurality of obstacle sensors. The sensor data output from the sensing device may be used for positioning, for example. Various ECUs mounted on the work vehicle **200** may collaborate to perform calculations and control for realizing autonomous driving based on the sensor data output from the sensing device.

In this embodiment, the fuel tank **50** is supported by a mounting frame **120.** The mounting frame **120** is fixed to the vehicle frame **102** straddling the driver seat **107.** The fuel tank **50** is located above the driver seat **107.** However, the installation location of the fuel tank **50** is not limited to the illustrated example and may be, for example, inside the front housing **110.**

In this embodiment, the mounting frame **120** is an elongated structure such as a pipe fixed to the vehicle frame **102.** The mounting frame **120** includes two frames positioned on the left and right sides of the work vehicle **200** (refer to FIG. **5**). The front portion of the mounting frame **120** has a curved shape. Note that the shape of the mounting frame **120** shown is just an example, and the shape of the mounting frame **120** is not limited to this example.

In this embodiment, the vehicle frame **102** includes a front frame **102A** that rotatably supports the front wheels **104F,** and a transmission case **102B** that rotatably supports the rear wheels **104R.** One end (front end) of the mounting frame **120** is fixed to the front frame **102A.** The other end (rear end) of the mounting frame **120** is fixed to the transmission case **102B.** These fixations may be made by appropriate methods such as welding or bolt joining, depending on the material of the mounting frame **120.** The mounting frame **120** may be formed from metal, synthetic resin, carbon fiber, or composite materials such as carbon fiber reinforced plastic or glass fiber reinforced plastic. The transmission case **102B** includes a rear axle case, and the rear end of the mounting frame **120** may be fixed to the rear axle case. When the mounting frame **120** is formed from metal, a portion or entirety of its surface may be covered with synthetic resin.

As shown in FIG. **6****,** the work vehicle **200** includes a cabin **105** that surrounds the driver seat **107** between the vehicle frame **102** and the mounting frame **120.** The driver seat **107** is located in the rear portion of the interior of the cabin **105.** In front of the driver seat **107,** for example, a steering wheel **106** for changing the direction of the front wheels **104F,** and an operation terminal **400** are provided. The cabin **105** includes a cabin frame that forms its skeleton. A roof **109** is provided on the upper part of the cabin frame. The cabin frame in this embodiment is a 4-pillar style. The cabin **105** is supported by the transmission case **102B** of the vehicle frame **102,** for example, via vibration-isolating mounts. The user interface **1** explained with reference to FIG. **4** is provided inside the cabin **105.** Since the cabin **105** does not directly support the fuel tank **50,** there is no need to specially increase its strength, and a cabin that has been used in conventional tractors can be adopted.

The work vehicle **200** includes a placement platform **51A** that connects the left frame **120** and the right frame **120.** The fuel tank **50** may be placed on the placement platform **51A.** When there is a plurality of fuel tanks **50,** the plurality of fuel tanks **50** may be provided in a fuel tank module **55.** As shown in FIG. **6****,** the fuel tank module **55** includes a tank case **51** that houses a plurality of fuel tanks **50.** The left and right mounting frames **120** may be connected to each other by structural elements other than the placement platform **51A.**

A coupling device **108** is provided at the rear end of the transmission case **102B,** which is the rear portion of the vehicle frame **102.** The coupling device **108** includes, for example, a three-point support device (also referred to as a "three-point link" or "three-point hitch"), a PTO shaft, a universal joint, and a communication cable. The implement **300** may be attached to or detached from the work vehicle **200** using the coupling device **108.** The coupling device **108** can, for example, raise and lower the three-point link by a hydraulic device to change the position or posture of the implement **300.** Also, power can be transmitted from the work vehicle **200** to the implement **300** via the universal joint. The work vehicle **200** can execute predetermined work (agricultural task) with the implement **300** while pulling the implement **300.** The coupling device **108** may be provided on the front portion of the vehicle frame **102.** In that case, the implement **300** can be connected to the front of the work vehicle **200.**

The implement **300** includes, for example, a drive device, a control device, and a communication device. The drive device performs the necessary actions for the implement **300** to execute predetermined work. The drive device includes, for example, a hydraulic device, an electric motor, or a pump, depending on the application of the implement **300.** The control device controls the operation of the drive device. The control device executes various operations of the drive device in response to signals transmitted from the work vehicle **200** via the communication device. It is also possible to transmit signals corresponding to the state of the implement **300** to the work vehicle **200** from the communication device.

The implement **300** shown in FIG. **6** is a rotary tiller, but the implement **300** is not limited to a rotary tiller. For example, any implement such as a seeder, a spreader (fertilizer applicator), a transplanter, a mower, a rake, a baler, a harvester, a sprayer, or a harrow can be connected to and used with the work vehicle **200.**

The work vehicle **200** shown in FIG. **6** is capable of manned operation, but it may also be adapted for unmanned operation only. In that case, components necessary only for manned operation, such as the cabin **105,** steering wheel **106,** and driver seat **107,** may not be provided on the work vehicle **200.** The work vehicle **200** which is unmanned can travel by autonomous driving or remote control by the user.

### (4.2. Display of Estimation Results)

The processing device in this embodiment is configured to estimate at least one of travelable distance, travelable area, and travelable time with work based on the remaining amount of fuel measured by the sensor **S4** provided in the fuel tank **50,** and the type of implement **300** connected to the PTO shaft **76** and/or the type of work performed by the implement **300,** and to display the estimation results on the display device.

The types of implements are, as described above, for example, rotary, seeder, or spreader. The types of work performed by the implement are, for example, tilling, seeding, or fertilizing. Note that the type of implement and the type of work do not necessarily correspond one-to-one. For example, when the type of implement is a rotary, the type of work may include a plurality of types such as tilling, puddling, or ridging.

The processing device, for example, acquires identification information of the implement **300** from the implement **300** connected to the PTO shaft **76,** and identifies the type of implement **300** based on the identification information. The work vehicle **200** and the implement **300** are configured to communicate in compliance with ISOBUS standards such as ISOBUS-TIM. In this manner, the processing device of the work vehicle **200** may obtain the identification information of the implement **300** by communicating with the implement **300.** Alternatively, the processing device may identify the type of implement **300** connected to the PTO shaft **76** and/or the type of work performed by the implement **300** based on information about the type of implement **300** and/or the type of work input by the user, for example, via the input device **410** of the operation terminal **400.**

The sensor **S4** obtains residual data of the fuel in the fuel tank **50.** The processing device is configured to estimate the remaining amount of fuel based on the residual pressure data output from the sensor **S4.** In this embodiment, the remaining amount of fuel estimated in this manner may be referred to as the remaining amount of fuel measured by the sensor **S4.** The remaining amount of fuel may be expressed as a percentage (%) of the remaining amount relative to the tank capacity in a full state.

The storage device **7** shown in FIG. **4** stores data indicating the relationship between the type of implement and/or the type of work, and the fuel consumption per unit time. The processing device in this embodiment estimates at least one of the travelable distance, travelable area, and travelable time with work based on this data. The unit of fuel consumption per unit time is, for example, L/h (liters/hour). Hereinafter, the fuel consumption per unit time is simply referred to as "fuel consumption".

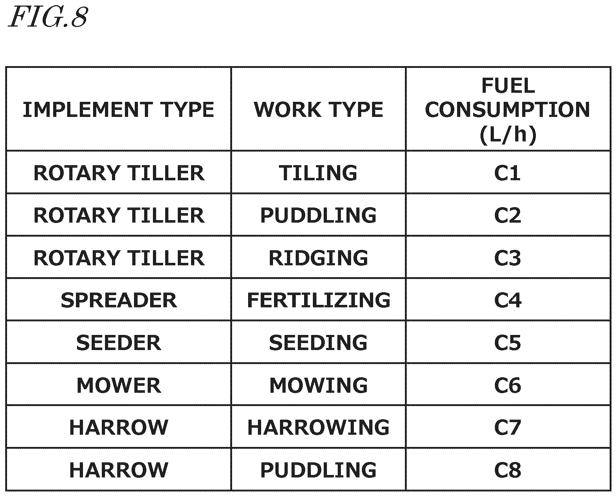

FIG. **8** is a diagram showing an example of a table showing the relationship between the type of implement, the type of work, and fuel consumption. In the example of the table (or lookup table) shown in FIG. **8****,** the types of implements include five types: rotary, spreader, seeder, mower, and harrow, and the types of work include seven types: tilling, puddling, ridging, fertilizing, seeding, mowing, and pulverizing. The table lists the corresponding fuel consumption for each combination of implement type and work type. For example, the fuel consumption when the work vehicle **200** is performing tilling work while towing a rotary is C1 L/h, and the fuel consumption when the work vehicle **200** is performing fertilizing work while towing a spreader is C4 L/h. The fuel consumption may differ depending on the type of implement. Additionally, even when the type of implement is the same, the fuel consumption may differ depending on the type of work.

The fuel consumption included in the example table means the combined fuel consumption of the work vehicle and the implement. However, the storage device may store table data that individually associates the fuel consumption of the work vehicle and the fuel consumption of the implement with the type of implement and the type of work. In this case, the processing device simply adds up the respective fuel consumptions identified by referring to the table.

The processing device identifies the fuel consumption corresponding to the type of implement **300** and the type of work by referring to the table. The processing device is configured to estimate the travelable time, travelable distance (e.g., km) with work based on the identified fuel consumption (L/h) and the amount of fuel remaining (L) measured by the sensor **S4.** For example, the processing device is configured to calculate the time available for work by dividing the remaining amount of fuel by the fuel consumption. The processing device may further calculate the travelable distance by multiplying the time available for work by the speed of the work vehicle **200.** The identification information of the implement **300** may further include information such as the size in the width direction of the implement **300.** The processing device may calculate the area of the workable area in the field by multiplying the travelable distance by the size in the width direction of the implement **300.** The processing device displays at least one of the distance, area, and time estimated in this manner on the display device.

The storage device **7** may store the fuel consumption C9 (L/h) when the implement **300** is not driven, that is, when the PTO is not driven. In this case, the processing device may estimate the travelable time and distance (e.g., km) without work based on the fuel consumption C9 (L/h) and the remaining amount of fuel (L) measured by the sensor **S4.** It should be noted that the fuel consumption C9 (L/h) when the implement is not driven is smaller than the fuel consumption when the implement is driven (for example, any of C1 to C8 shown in FIG. **8**).

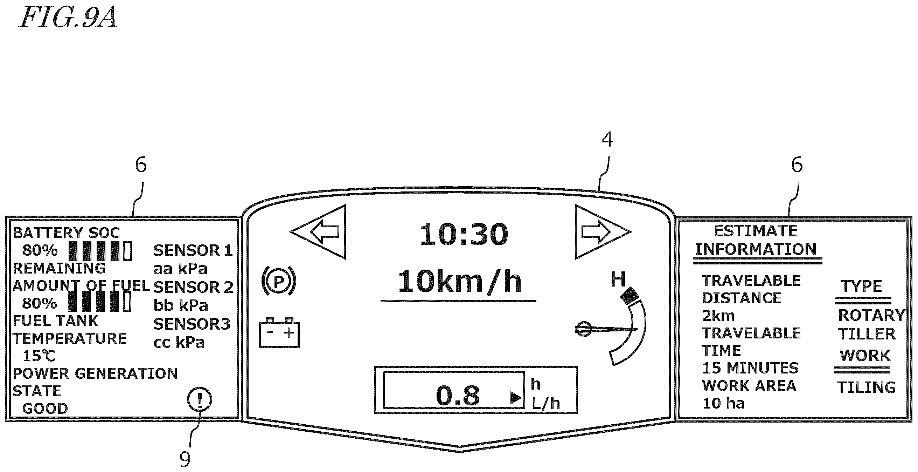

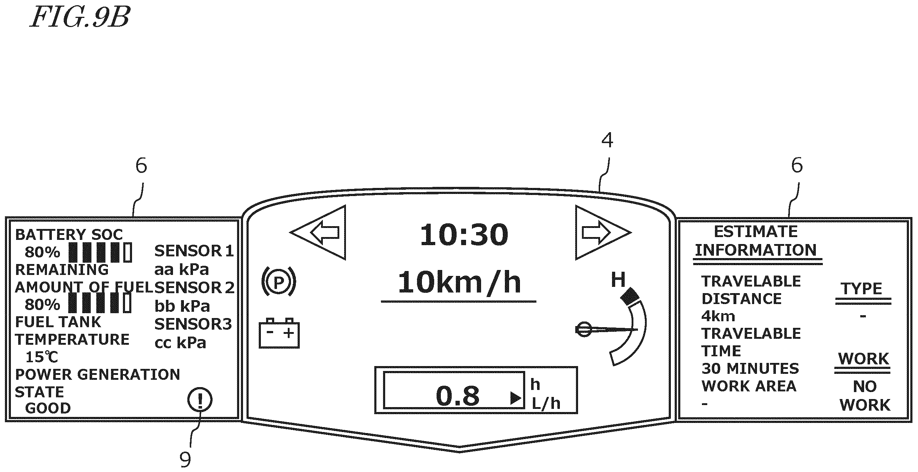

FIG. **9A** is a diagram schematically showing an example of displaying estimation results on the display device when the implement is driven. FIG. **9B** is a diagram schematically showing an example of displaying estimation results on the display device when the implement is not driven.

The display devices exemplified in FIG. **9A** and FIG. **9B** are the main meter **4** and the FC meter **6.** In this example, each of the main meter **4** and the FC meter **6** is a digital meter. However, a digital meter is not essential. The display of the main meter **4** includes, for example, information related to the speed of the work vehicle **200,** time, fuel consumption, turn signal indicator, parking brake lamp, charge lamp indicating abnormality in the charging system, and water temperature gauge indicator showing the state of the radiator device (e.g., temperature measured by the temperature sensor **S3**).

In the examples shown in FIG. **9A** and FIG. **9B****,** FC meters **6** are placed on both sides of the main meter **4.** However, the FC meter **6** may be placed only on one side of the main meter **4,** and the shape of each meter is not limited to the illustrated example and can be arbitrary. The FC meter **6** displays information related to the operating state of the FC power generation system **180.** In this embodiment, the FC meter **6** further displays the estimation results of the processing device described above as prediction information.

The display of the FC meter **6** on the left side in the examples shown in FIG. **9A** and FIG. **9B** includes information related to the battery SOC (state of charge) indicating the charging state of the battery pack **80,** the remaining amount of fuel (%) in the fuel tank **50,** the temperature of the fuel tank (°C), and the value (kPa) of the sensor **S4** (pressure sensor) provided in the fuel tank **50.** The display of the FC meter **6** on the left side further includes the power generation state of the FC stack **11,** a warning lamp **9** to warn abnormalities in the fuel tank **50,** and indicators corresponding to the battery SOC and the remaining amount of fuel, respectively.

In the example shown in FIG. **9A****,** the FC meter **6** on the right side displays information on the travelable distance, travelable (workable) time, and workable area, which are the estimation results when the implement is driven. While the implement is being driven, the PTO clutch is in a connected state. However, not all of this information needs to be displayed. For example, the travelable distance and travelable time may be displayed, and the workable area information may not be displayed. The FC meter **6** on the right side further displays information on the type of implement and the type of work.

In the example shown in FIG. **9B****,** the FC meter **6** on the right side displays information on the travelable distance and travelable time, which are the estimation results when the implement is not driven. When the PTO clutch is in a disconnected state, or even when the PTO clutch is in a connected state, if a prediction button (operation button) provided around the driver seat (e.g., in the cabin) is ON, the display of the FC meter **6** on the right side may be configured to switch from the state shown in FIG. **9A** to the state shown in FIG. **9B****.** The prediction button is a button to cause the processing device to execute estimation based on the fuel consumption C9.

In this manner, by presenting at least one of the information on travelable distance, travelable time, and workable area, which are the estimation results, to, for example, a driver seated in the driver seat or a user utilizing the operation terminal, it may facilitate prompting the driver or user to make decisions such as refueling, stopping the operation of the implement, or changing the work plan. Furthermore, by presenting information related to the operating state of the FC power generation system to the driver or user, it may facilitate prompting the driver or user to inspect the work vehicle or FC power generation system, for example.

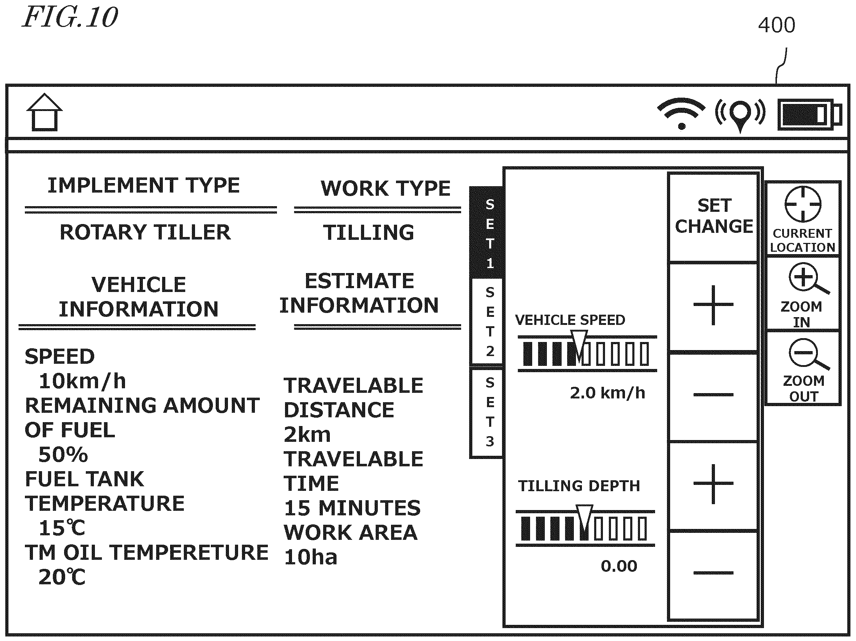

FIG. **10** is a diagram schematically showing another example of displaying estimation results on the display device. The display device exemplified in FIG. **10** is an operation terminal **400.** The screen of the operation terminal **400** may also display the same or similar information as that which may be displayed on the FC meter **6.** The screen of the operation terminal **400** exemplified in FIG. **10** displays an input interface to set vehicle speed and plowing depth, and vehicle information, in addition to the type of implement, the type of work, and prediction information.

The processing device may calculate at least one of a travelable distance, a travelable area, and a travelable time when the operation of the implement **300** is stopped, and display the calculation results on the display device. Compared to operating the implement, stopping the operation of the implement may improve fuel consumption. Therefore, the travelable distance and workable area may expand, and the travelable time may become longer. The processing device may estimate at least one of the travelable distance, travelable area, and travelable time based on the fuel consumption or fuel efficiency of the work vehicle **200** and the remaining amount of fuel. This allows, for example, the driver to easily make decisions about stopping the operation of the implement, as they can grasp the prediction information when the operation of the implement is stopped.

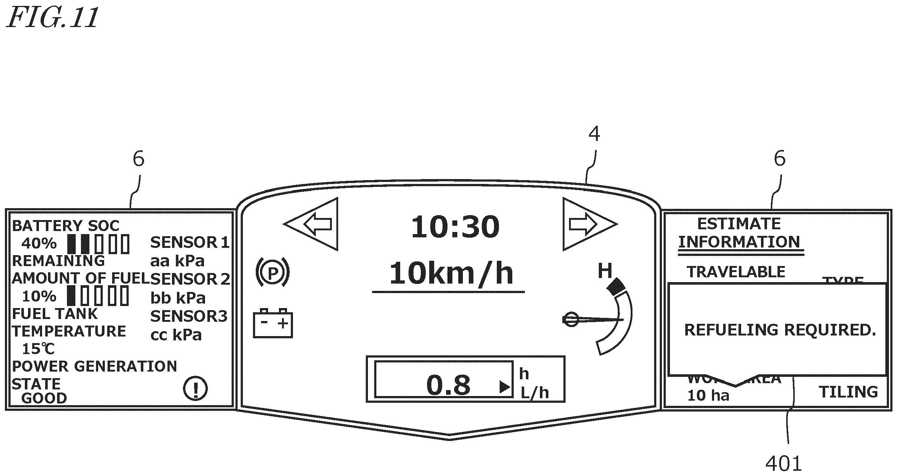

FIG. **11** is a diagram schematically showing an example of a display including information prompting refueling. FIG. **11** shows an example of a digital meter display. The processing device may display information prompting refueling on the display device when the remaining amount of fuel falls below a threshold value. The threshold value may be set to, for example, 10-20%. For example, when the remaining amount of fuel (%) falls below the threshold value, the processing device may display (pop up) a message **401** such as "Refueling is necessary" on the FC meter **6** as shown in FIG. **11****.** Such a display can easily prompt, for example, the driver to refuel.

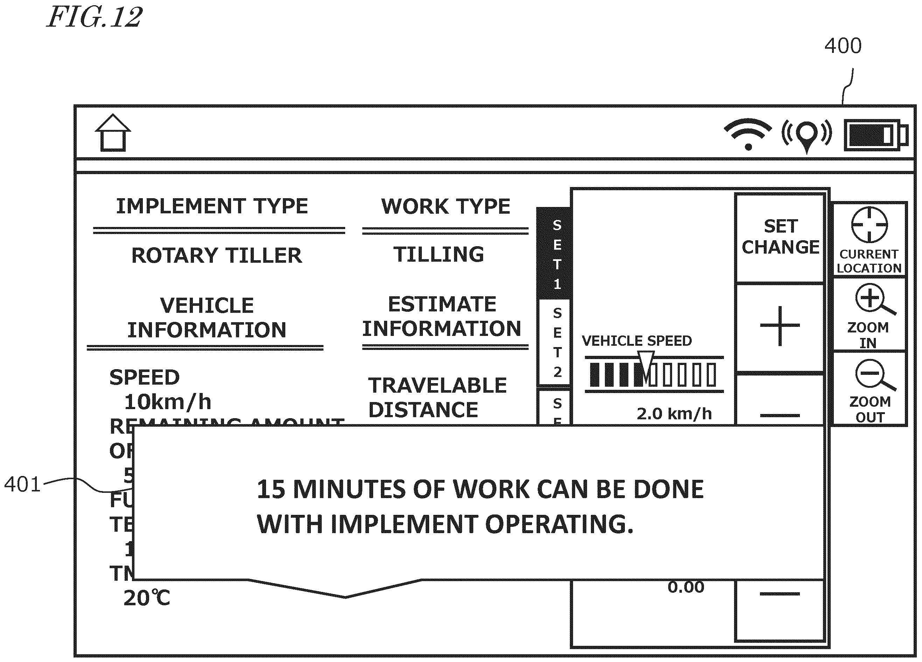

FIG. **12** is a diagram schematically showing an example of a pop-up display including information on travelable time. FIG. **12** shows an example of a display on the screen of the operation terminal **400.** The processing device may display a pop-up display including prediction information based on the estimation results on the display device. As exemplified in FIG. **12****,** the processing device may display (pop up) a message **401** such as "You can work for 15 more minutes with the implement in operation" on the FC meter **6.** The message is not limited to the illustrated example, and may be, for example, a message notifying that the remaining amount of fuel is low, a message prompting the replacement of the cartridge of the ion exchanger included in the FC module, or a message prompting to stop in case the implement is detached.

The processing device may cause the audio output device to output audio based on the estimation results, and/or audio prompting refueling. For example, the processing device may cause a speaker to output audio notifying the travelable distance or time based on the estimation results, or audio prompting refueling. Alternatively, the processing device may cause a buzzer to output a buzzer sound prompting refueling.

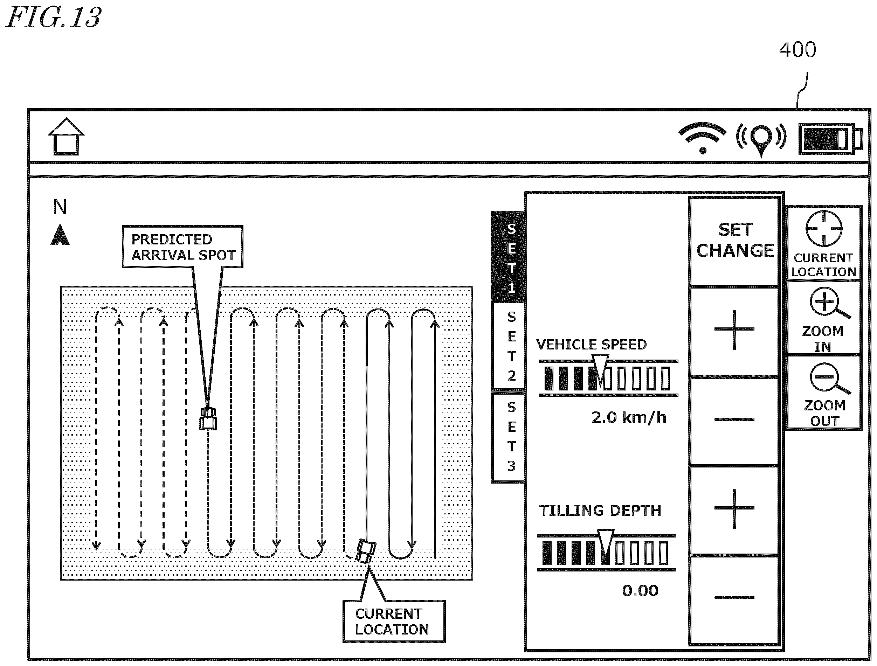

FIG. **13** is a diagram schematically showing an example of a display including map information. The map in the example of the display shown in FIG. **13** includes a target route indicated by arrows set within the field. The work vehicle **200** may further include a GNSS (Global Navigation Satellite System) receiver used for positioning. For example, the main ECU **3** of the work vehicle **200** may automatically travel the work vehicle **200** based on the position of the work vehicle **200** and the information of the target route.

The processing device may display, based on the estimation results, map information indicating up to which position in the field work can be performed on the display device. The map on the screen of the operation terminal **400** exemplified in FIG. **13** shows the current location of the work vehicle **200** and the predicted arrival spot based on the estimation results. The processing device determines the coordinates of the predicted arrival spot in the geographic coordinate system based on, for example, the coordinates of the current location in a geographic coordinate system anchored to the earth, the target route, and the estimated travelable distance. The coordinates in the geographic coordinate system are represented by, for example, latitude and longitude. In this manner, by having the processing device display information that visualizes the estimation results on the display device, for example, the driver or user can easily make decisions on continuing work or changing the work plan.

### (4.3. Operation of the Processing Device)

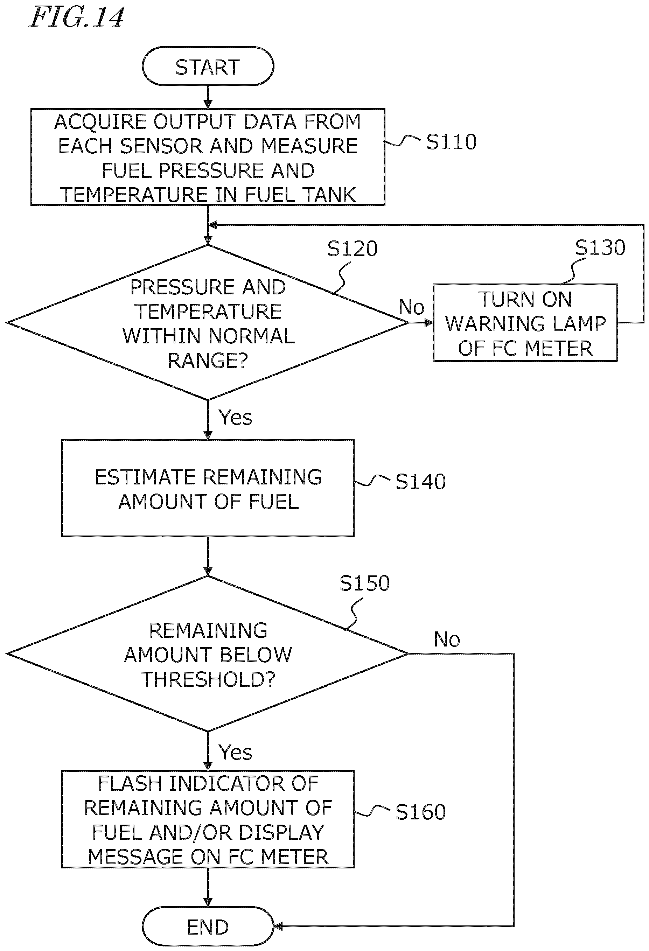

Lastly, an example of the operation of the processing device will be described with reference to FIG. **14****.**

FIG. **14** is a flowchart showing the processing procedure of an example operation of the processing device.

First, the processing device acquires sensor data output from the temperature sensor of the fuel tank **50** and measures the temperature of the fuel tank **50** based on the sensor data. The processing device acquires sensor data output from the sensor **S4** (pressure sensor) of the fuel tank **50** and measures the pressure of the fuel in the fuel tank **50** based on the sensor data (step **S110**).

Next, the processing device determines whether each of the temperature of the fuel tank **50** and the pressure of the fuel is within a normal range (step **S120**). When each value is within the normal range, the process proceeds to the next step **S140** (Yes of step **S120**). When either of the values of the temperature of the fuel tank **50** and the pressure of the fuel is not within the normal range, the processing device turns on, for example, the warning lamp **9** of the FC meter **6** (refer to FIG. **9A** and FIG. **9B**) (No of step **S120**).

Next, the processing device estimates the remaining amount of fuel based on the fuel pressure as described above **(S140).** The processing device determines whether the remaining amount of fuel is less than a threshold value **(S150).** When the remaining amount of fuel is less than the threshold value (Yes of **S150),** the processing device may, for example, flash the fuel remaining indicator of the FC meter **6** or display a message prompting refueling on the FC meter **6 (S160).** Alternatively, when the remaining amount of fuel is less than the threshold value, the processing device may display the aforementioned travelable distance, time, or workable area on the FC meter **6.**

In one aspect, when the implement is being driven (that is, the PTO clutch is in a connected state) and the prediction button is OFF, the processing device estimates the travelable distance, travelable time, and travelable area with work based on the fuel consumption C1 to C8 (L/h) shown in FIG. **8****,** for example. The processing device may display the estimated travelable distance, time, and workable area along with the type of work and the type of implement as shown in FIG. **9A****.**

In another aspect, when the implement is not being driven (that is, the PTO clutch is in a disconnected state), or even when the implement is being driven, when the prediction button is ON, the processing device estimates the travelable distance and time without work based on the fuel consumption C9 (L/h) when the implement is not driven. The processing device may display the estimated travelable distance and time as shown in FIG. **9B****.**

When the remaining amount of fuel is equal to or greater than the threshold value (No of **S150),** the process ends.

The configurations and operations of the above embodiments are merely exemplary, and the present disclosure is not limited to the above embodiments. For example, various embodiments may be appropriately combined to configure other embodiments.

As described above, the present disclosure includes work vehicles as recited in the following Items.

### [Item 1]

A work vehicle comprising:
a fuel cell module including a fuel cell stack;
at least one fuel tank to store fuel to be supplied to the fuel cell stack;
a sensor to measure a remaining amount of fuel in the fuel tank;
a motor connected to the fuel cell module;
a power take-off shaft to be driven by the motor, the power take-off shaft being connected to an implement;
a display device; and
a processing device to estimate, based on the measured remaining amount of fuel and a type of the implement connected to the power take-off shaft and/or a type of work performed by the implement, at least one of a travelable distance, a travelable area, or a travelable time with the work, and to display an estimation result on the display device.

### [Item 2]

The work vehicle according to item 1, wherein the processing device acquires identification information of the implement from the implement connected to the power take-off shaft and identifies the type of the implement and/or the type of work performed by the implement based on the identification information.

### [Item 3]

The work vehicle according to item 1, wherein the processing device identifies the type of the implement and/or the type of work performed by the implement based on information related to the type of the implement and/or type of work input by a user via an input device.

### [Item 4]

The work vehicle according to any one of items 1 to 3, further comprising a storage device to store data indicating a relationship between the type of the implement and/or the type of work and fuel consumption per unit time;
wherein the processing device estimates the at least one of the travelable distance, the travelable area, and the travelable time based on the data.

### [Item 5]

The work vehicle according to any one of items 1 to 4, wherein the processing device further calculates at least one of the travelable distance, the travelable area, and the travelable time when operation of the implement is stopped, and displays a calculation result on the display device.

### [Item 6]

The work vehicle according to any one of items 1 to 5, wherein when the remaining amount of fuel falls below a threshold value, the processing device displays information prompting refueling on the display device.

### [Item 7]

The work vehicle according to any one of items 1 to 6, wherein the processing device displays, based on the estimation result, map information indicating up to which position in a field the work can be performed on the display device.

### [Item 8]

The work vehicle according to any one of items 1 to 7, further comprising an audio output device,
wherein the processing device causes the audio output device to output audio based on the estimation result and/or audio prompting refueling.

### [Item 9]

The work vehicle according to any one of items 1 to 8, wherein the sensor includes a pressure sensor to measure pressure of the fuel corresponding to the remaining amount of fuel.

### [Item 10]

The work vehicle according to any one of items 1 to 9, wherein the display device includes a meter panel.

### [Item 11]

The work vehicle according to any one of items 1 to 10, wherein the work vehicle is an agricultural machine.

### INDUSTRIAL APPLICABILITY

The technology of this disclosure can be applied to agricultural machines such as tractors, harvesters, rice planters, riding management vehicles, vegetable transplanting machines, mowers, seeders, fertilizer applicators, or agricultural robots.

### REFERENCE SIGNS LIST

**1:** User interface, **2:** Operation device, **3:** Main ECU, **4:** Main meter, **5:** FC system ECU, **6:** FC meter, **7:** Storage device, **8:** Audio output device, **10:** Fuel cell module, **11:** FC stack, **40:** Boost circuit, **34:** Radiator device, **40:** Boost circuit, **50:** Fuel tank, **51:** Tank case, **70:** Motor, **71:** Output shaft, **72:** Inverter device, **74:** Power transmission system, **76:** Power take-off (PTO) shaft, **80:** Battery pack, **81:** First DC-DC converter, **82:** Second DC-DC converter, **83:** Storage battery, **85:** Air conditioning compressor, **86:** Heater, **100:** Work vehicle, **102:** Vehicle frame, **102A:** Front frame, **102B:** Transmission case, **104:** Wheel, **104F:** Front wheel, **104R:** Rear wheel, **107:** Driver seat, **120:** Mounting frame

## Claims

1. A work vehicle comprising:
a fuel cell module including a fuel cell stack;
at least one fuel tank to store fuel to be supplied to the fuel cell stack;
a sensor to measure a remaining amount of fuel in the fuel tank;
a motor connected to the fuel cell module;
a power take-off shaft to be driven by the motor, the power take-off shaft being connected to an implement;
a display device; and
a processing device to estimate, based on the measured remaining amount of fuel and a type of the implement connected to the power take-off shaft and/or a type of work performed by the implement, at least one of a travelable distance, a travelable area, or a travelable time with the work, and to display an estimation result on the display device.

2. The work vehicle according to claim 1, wherein the processing device acquires identification information of the implement from the implement connected to the power take-off shaft and identifies the type of the implement and/or the type of work performed by the implement based on the identification information.

3. The work vehicle according to claim 1, wherein the processing device identifies the type of the implement and/or the type of work performed by the implement based on information related to the type of the implement and/or type of work input by a user via an input device.

4. The work vehicle according to claim 1, further comprising a storage device to store data indicating a relationship between the type of the implement and/or the type of work and fuel consumption per unit time;
wherein the processing device estimates the at least one of the travelable distance, the travelable area, and the travelable time based on the data.

5. The work vehicle according to any one of claims 1 to 4, wherein the processing device further calculates at least one of the travelable distance, the travelable area, and the travelable time when operation of the implement is stopped, and displays a calculation result on the display device.

6. The work vehicle according to any one of claims 1 to 4, wherein when the remaining amount of fuel falls below a threshold value, the processing device displays information prompting refueling on the display device.

7. The work vehicle according to any one of claims 1 to 4, wherein the processing device displays, based on the estimation result, map information indicating up to which position in a field the work can be performed on the display device.

8. The work vehicle according to any one of claims 1 to 4, further comprising an audio output device,
wherein the processing device causes the audio output device to output audio based on the estimation result and/or audio prompting refueling.

9. The work vehicle according to any one of claims 1 to 4, wherein the sensor includes a pressure sensor to measure pressure of the fuel corresponding to the remaining amount of fuel.

10. The work vehicle according to any one of claims 1 to 4, wherein the display device includes a meter panel.

11. The work vehicle according to any one of claims 1 to 4, wherein the work vehicle is an agricultural machine.
